**Europäisches Patentamt**

**European Patent Office**

**Office européen des brevets**

(11) Veröffentlichungsnummer: **0 428 999 A1**

# EUROPÄISCHE PATENTANMELDUNG

(21) Anmeldenummer: **90121838.8**

(22) Anmeldetag: **15.11.90**

(51) Int. Cl.⁵: **C08L 31/04**, C08L 71/02, C08L 67/02

(30) Priorität: **24.11.89 DE 3938894**

(43) Veröffentlichungstag der Anmeldung:
**29.05.91 Patentblatt 91/22**

(84) Benannte Vertragsstaaten:
**AT BE CH DE DK ES FR GB IT LI LU NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Menke, Klaus, Dr.**
**Näherweg 11**
**W-7520 Bruchsal(DE)**
Erfinder: **Merz, Lothar**
**Tullastrasse 65**
**W-7500 Karlsruhe(DE)**
Erfinder: **Helfrich, Mathias**
**Südring 16**
**W-6740 Landau(DE)**

(74) Vertreter: **Lichti, Heiner Dipl.-Ing., Patentanwälte Dipl.-Ing. Heiner Lichti, Dipl.-Phys. Dr. Jost Lempert, Durlacher Strasse 31 Postfach 410760**
**W-7500 Karlsruhe 41(DE)**

(54) **Binder für Metall- oder Keramikpulver.**

(57) Eine Binderzusammensetzung für das Spritzgießen oder Extrudieren von Metall- oder Keramikpulvern in der Sintertechnologie besteht aus 30 bis 90 Gew.-% PVA mit einem mittleren Molekulargewicht von 35.000 bis 1.000.000 und 10 bis 70 Gew.-% PEG mit einem mittleren Molekulargewicht von 500 bis 50.000 als Schmelzeweichmacher und Verarbeitungsplastifikator. PEG kann ganz oder teilweise durch präpolymere, aliphatische Polyester aus Adipinsäure und PEG mit einem mittleren Molekulargewicht von 2.000 bis 20.000 oder durch hydroxyterminierte Copolymere aus Ethylenund Propylenoxid mit gleichem mittlerem Molekulargewicht ersetzt sein.

Fig.2

EP 0 428 999 A1

# BINDER FÜR METALL- ODER KERAMIKPULVER

Die Erfindung betrifft eine Binderzusammensetzung für das Spritzgießen oder Extrudieren von Metall- oder Keramikpulvern.

Für die Herstellung metallischer oder keramischer Bauteile mit komplexer Geometrie in größeren Stückzahlen ist das Pulverspritzgießen oder -extrudieren bekannt. Diese Gießmethode ist in vielen Fällen die einzig wirtschaftliche, manchmal auch die einzig mögliche Alternative. Bei diesem Verfahren wird das Metall- oder Keramikpulver in einem polymeren thermoplastischen Bindersystem dispergiert und zu einem Compound verarbeitet. Dabei geht das Bestreben dahin, möglichst hohe Füllstoffanteile (Pulveranteile) zu erhalten. Nach der Formgebung des Compounds im Spritzgieß- oder Extrudierverfahren entsteht zunächst ein kunststoffgebundener Grünling. Diesem wird dann durch kontrolliertes Ausheizen der Binder entzogen und das verbleibende porige Metallteil bis zur Endfestigkeit bei hohen Tempera turen gesintert. Keramik-Grünlinge werden zusätzlich unter hohem Druck verdichtet (HIP-Verfahren).

Bei diesem Verfahren muß der Binder eine Reihe von Anforderungen erfüllen. So muß eine thermoplastische Verarbeitung im Extrudier- oder Spritzgießverfahren bei Temperaturen von ca. 80 bis 200 Grad Celsius möglich sein. Dabei muß das Compound eine ausreichende Fließfähigkeit, d. h. eine hinreichend große Fließweglänge auch bei hohem Füllstoffanteil besitzen. Das Compound muß bei Raumtemperatur zu einer festen Matrix mit ausreichender Stabilität und Standfestigkeit erstarren (gute Grünfestigkeit des spritzgegossenen oder extrudierten Teils). Bei der Verarbeitung, die unter hoher Scherbelastung erfolgt, sollen keine Entmischungen von Pulver und Binder stattfinden. Die Binderzusammensetzung darf bei Raumtemperatur keine Klebewirkung haben, um das Bauteil problemlos extrudieren bzw. entformen zu können. Bei Temperaturen oberhalb der Verarbeitungstemperatur muß die Binderzusammensetzung rückstandsfrei zersetzt bzw. verbrannt werden können. Beim Austreiben des Binders (Pyrolyse) darf an dem Grünling keine Formänderung stattfinden. Ferner darf der Grünling nicht zerstört oder verbrannt werden. Diese Bedingungen müssen auch dann erfüllt sein, wenn das Austreiben bzw. die Pyrolyse in kurzer Zeitspanne ablaufen. Schließlich muß der Binder wirtschaftlich und preisgünstig sein.

Bekannte Bindersysteme sind auf der Basis von Polyethylen, Polypropylen und Wachsen aufgebaut. Sie bestehen vornehmlich aus unpolaren, schlecht benetzenden Kohlenwasserstoffpolymeren, die sich teilweise erst bei hohen Temperaturen zersetzen und sich auch nur langsam austreiben lassen. Sofern Wachse eingesetzt werden, besitzen diese häufig phenolische, unter Umständen auch aromatische Bestandteile, die bei der Pyrolyse unter Inertgas oder Vakuum graphiti sieren und dadurch Rückstände am fertigen Formkörper hinterlassen.

Eine Bindemittelzusammensetzung, die vor allem die Möglichkeit eines rückstandsfreien und schnellen Austreibens gestattet, ist auf der Basis von Methylcellulose, Wasser, Glyzerin und Borsäure aufgebaut (Rivers-Verfahren). Dieses Verfahren bereitet jedoch Schwierigkeiten, eine gut fließende Konsistenz des Binders bei einer ausreichenden Grünfestigkeit des gegossenen bzw. extrudierten Formkörpers einzustellen. Es sind zudem lange Verweil- und Härtungszeiten in der Form nötig, die das Verfahren unrentabel machen, weshalb es sich in der Serienproduktion nicht durchsetzen konnte. Der vorgenannte Stand der Technik ist in der Literatur gemäß anhängender Liste beschrieben.

Der Erfindung liegt die Aufgabe zugrunde, eine Binderzusammensetzung zu schaffen, die die Herstellung eines beim Spritzgießen oder Extrudieren gut fließfähigen Compounds gestattet und sich rückstandsfrei und in kurzer Zeitspanne pyrolisieren und austreiben läßt.

Eine solche Binderzusammensetzung besteht erfindungsgemäß aus 30 bis 90 Gew.-% Polyvinylacetat (PVAc) mit einem mittleren Molekulargewicht von 35.000 bis 1.000.000 und 10 bis 70 Gew.-% eines Schmelzeweichmachers und Verarbeitungsplastifikators für das PVAc ausgewählt aus

    a) Polyethylenglykol (PEG) mit einem mittleren Molekulargewicht von 500 bis 50.000,

    b) präpolymeren, aliphatischen Polyestern aus Adipinsäure und PEG mit einem mittleren Molekulargewicht von 2.000 bis 20.000 und

    c) hydroxyterminierten Copolymeren aus Ethylen-und Propylenoxid mit einem mittleren Molekulargewicht von 2.000 bis 20.000,

wobei die Komponente a) mit b) oder c) auch im Gemisch vorliegen kann mit einem Anteil von 5 bis 30 Gew.-% an b) oder c) an der Gesamtmenge der Bindemittelzusammensetzung.

Polyvinylacetat als polares thermoplastisches Polymer und Polyethylenglykol als Plastifikator lassen sich leicht pyrolisieren und rückstandsfrei austreiben. Beide Komponenten besitzen einen vergleichsweise hohen Sauerstoffindex und sind deshalb durch thermische Pyrolyse oberhalb ca. 200 Grad Celsius rückstandsfrei in niedermolekulare Komponenten zerlegbar. Zwar sind PVAc und PEG bei Raumtemperatur und im festen Zustand nicht mischbar. Bei Temperaturen ab ca. 70 Grad Celsius beginnt sich jedoch das schmelzende PEG mit dem PVAc zu einer homogenen, gut fließenden Lösung zu vermischen. Das PEG wirkt deshalb als Schmelzeweichmacher und Plastifikator für das PVA. Es bewirkt eine deutliche Herabsetzung der Schmelzeviskosität und gestattet eine nicht unerhebliche Erhöhung des Pulveranteils im Compound. Durch das PEG wird ferner eine sehr gute Benetzung und Dispergierung der Metall- oder Keramikpulverpartikel erreicht. Die mit der erfindungsgemäßen Binderzusammensetzung hergestellten Compounds können selbst bei sehr feinkörnigem, schwer benetzbarem Hartmetall, z. B. Wolframcarbid mit Cobalt in einer mittleren Korngröße von 1 bis 2 μm bis zu 70 % Füllstoff enthalten. Sie sind trotz dieser hohen Füllstoffkonzentration gut fließfähig und ohne Schwierigkeiten durch Extrudieren oder Spritzgießen mit hohen Fließweglängen bei Temperaturen von 90 bis 120 Grad Celsius verarbeitungsfähig. Aufgrund dieser niedrigen Verarbeitungstemperatur ist keine oder allenfalls eine geringe Beheizung des Spritzgieß- bzw. Extrudierwerkzeugs erforderlich. Selbst bei Raumtemperatur des Spritzgießwerkzeugs lassen sich bei hoher Einspritzgeschwindigkeit noch ausreichend große Fließlängen erreichen. Auch ist durch die benetzende Wirkung des PEG keine Trennung von Feststoff und flüssiger Binderkomponente festzustellen. Ähnliche Vorteile und Wirkungen lassen sich mit den alternativ angegebenen Schmelzeweichmachern und Plastifikatoren, nämlich präpolymeren, aliphatischen Polyestern aus Adipinsäure und PEG oder hydroxyterminierten Copolymeren aus Ethylen- und Propylenoxid bei einem mittleren Molekulargewicht von jeweils 2.000 bis 20.000 erzielen. Auch Mischungen von PEG mit den alternativ angegebenen Schmelzeweichmachern führen zum Ziel, wobei der PEG-Anteil an der Gesamtmenge der Bindemittelzusammensetzung 5 bis 30 Gew.-% beträgt.

Es ist zwar beim Schlickerguß (Slurry) bekannt (JP-A-62-92804), Polyvinylbutyral mit PEG als Weichmacher oder PVAc mit Phthalsäureester als Weichmacher einzusetzen und mit einem Lösungsmittel zu versetzen, doch wird hierbei in flüssiger Phase gearbeitet und das Pulver in der flüssigen Phase dispergiert, so daß ein gießfähiger Slurry entsteht.

Vorzugsweise wird das PVAc mit einem Molekulargewicht von 50.000 bis 200.000, das PEG mit einem mittleren Molekulargewicht von 6.000 bis 35.000 eingesetzt.

Ferner hat sich als besonders vorteilhaft eine Zusammensetzung von 60 bis 80 Gew.-% PVAc und 20 bis 40 Gew.-% PEG herausgestellt.

Es empfiehlt sich weiterhin, als Benetzungsmittel und Dispergierhilfsmittel für das Metall- oder Keramikpulver rückstandsfrei pyrolisierbare aliphatische Tenside, z. B. Polyethylenoxidaddukte an Fettsäuren, Fettalkoholen und -amiden, Zucker-, Celluloseester von organischen Fettsäuren oder -ether von Fettalkoholen oder Lecithin mit einem Anteil von 0,5 bis 5 Gew.-% zuzugeben.

Vorteilhaft für die Anbindung der Pulverpartikel in der Bindermatrix wirkt sich der Zusatz von Haftvermittlern aus, wofür insbesondere aliphatische Aminoalkohole, Aminoether, Aminoetheralkohole oder Hydantoine mit einem Anteil von 0,5 bis 5 Gew.-% in Frage kommen.

Schließlich läßt sich die Verarbeitbarkeit und Fließfähigkeit der Compounds noch durch rückstandsfrei pyrolisierende Gleitmittel verbessern. Hierfür kommen insbesondere Paraffine und/oder kurzkettige Ethylenpolymere oder aliphatische Fettsäureester mit mindestens 8 C-Atomen mit einem Anteil von 0,5 bis 8 Gew.-% in Frage.

Die erfindungsgemäße Binderzusammensetzung läßt sich besonders vorteilhaft bei der Verarbeitung von Wolframcarbid/Cobalt, Tantal- oder Niobcarbid-Hartmetallwerkstoffen, wie auch für Schwermetallwerkstoffe auf der Basis Eisen/Nickel, Wolfram/Nickel/Eisen sowie auch für Nickelsuperlegierungen einsetzen. Ebenso können korrosionsbeständige Edelstahlpulver mit der erfindungsgemäßen Binderzusammensetzung bei Füllstoffgehalten bis zu 70 Vol.-% verarbeitet werden. Gleiches gilt für keramische Werkstoffe, wie Siliciumcarbid und -nitrid, Titan- oder Zirkonnitride, -carbide oder -boride, Zirkonoxid-, Aluminiumoxidpulver etc.

Die erfindungsgemäße Binderzusammensetzung läßt auch eine wirtschaftliche Fertigung zu. Dies ergibt sich sowohl aus den vergleichsweise geringen Kosten der Ausgangsstoffe und den geringen Verfahrenskosten, so daß ein kostengünstiges Spritzgießen oder Extrudieren von Pulvermetallwerkstoffen oder Pulverkeramikwerkstoffen möglich ist. Da das Austreiben rückstandsfrei in kurzer Zeit bei relativ niedrigen Temperaturen möglich ist, ergeben sich hervorragende Material- und Sinterqualitäten am fertigen Formkörper.

Beispiel 1

Bei einem Hartmetall-Pulver aus 94 Gew.-% Wolframcarbid und 6 Gew.-% Cobalt mit einer mittleren Korngröße von 1 bis 2 μm wird ein Kunststoffbinder aus 70 Gew.-% Polyvinylacetat ("Mowilith 20" der Firma Hoechst AG) und 30 Gew.-% Polyethylenglykol mit einem Molekulargewicht von 20.000 verwendet.

Es werden 65 Vol.-% Hartmetall-Pulver mit 35 Vol.-% Kunststoffbinder unter Zusatz von 1,5 Gew.-% Polyethoxysorbitantrioleat als Benetzungs- und Dispergierhilfsmittel in einem Horizontalkneter bei Raumtemperatur trocken vorgemischt. Die Pulver/Bindermischung wird anschließend in einem Extruder bei 120 Grad Celsius aufgeschmolzen und homogenisiert und nach dem Extrudieren zu einem Compound granuliert. Dieses Granulat ist lagerfähig und kann durch Spritzgießen oder Extrudieren weiterverarbeitet werden. Der Bindergehalt von 35 Vol.-% entspricht ca. 5 Gew.-% im Compound.

Nach der Herstellung eines Grünkörpers durch Spritzgießen oder Extrudieren wird der Binder unter Inertgas, z. B. Argon, bei Temperaturen von ca. 200 Grad Celsius ausgetrieben. Diese Temperatur wird für etwa eine Stunde beibehalten. Danach wird die Temperatur auf 270 Grad Celsius angehoben und für ca. zwei Stunden gehalten, anschließend auf 320 Grad Celsius angehoben und nochmals für etwa zwei Stunden gehalten und schließlich die Temperatur langsam bis ca. 550 Grad Celsius gesteigert. Im unmittelbaren Anschluß kann dann unter Zudosieren von Wasserstoff direkt auf Sintertemperatur erhitzt werden. Die Dauer des Sintervorgangs hängt von der errreichbaren Temperatur und der Größe des Werkstücks ab. Als Untergrenze können 1.200 Grad Celsius gelten, doch sollte die Sintertemperatur nach Möglichkeit oberhalb 1.400 Grad Celsius liegen.

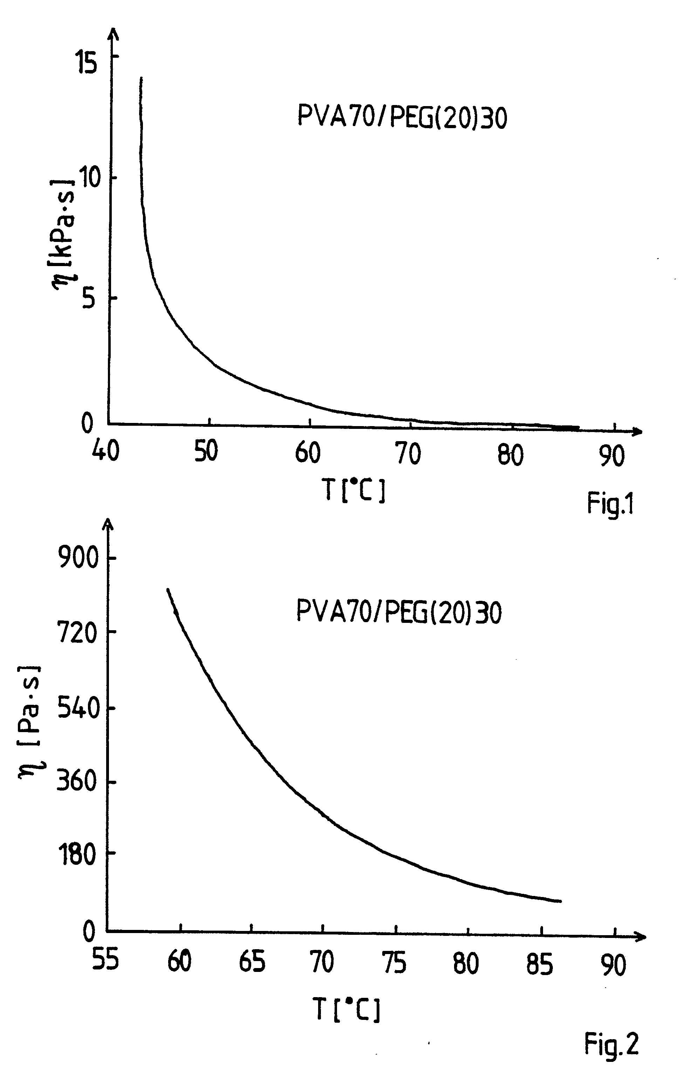

Figur 1 zeigt in Form eines Diagramms für den Binder gemäß oben genanntem Beispiel den Verlauf der Viskosität in kPa·s über der Temperatur und in Figur 2 in größerer Auflösung für den maßgeblichen Temperaturbereich die Viskosität in Pa·s. Hieraus wird die gute Fließfähigkeit des Binders bei Temperaturen oberhalb 70 Grad Celsius ersichtlich, wo eine homogene und gut fließende Vermischung von PVAc und PEG eintritt. Zugleich ist dieser Viskositätsverlauf maßgeblich für die gute Fließfähigkeit des Compounds.

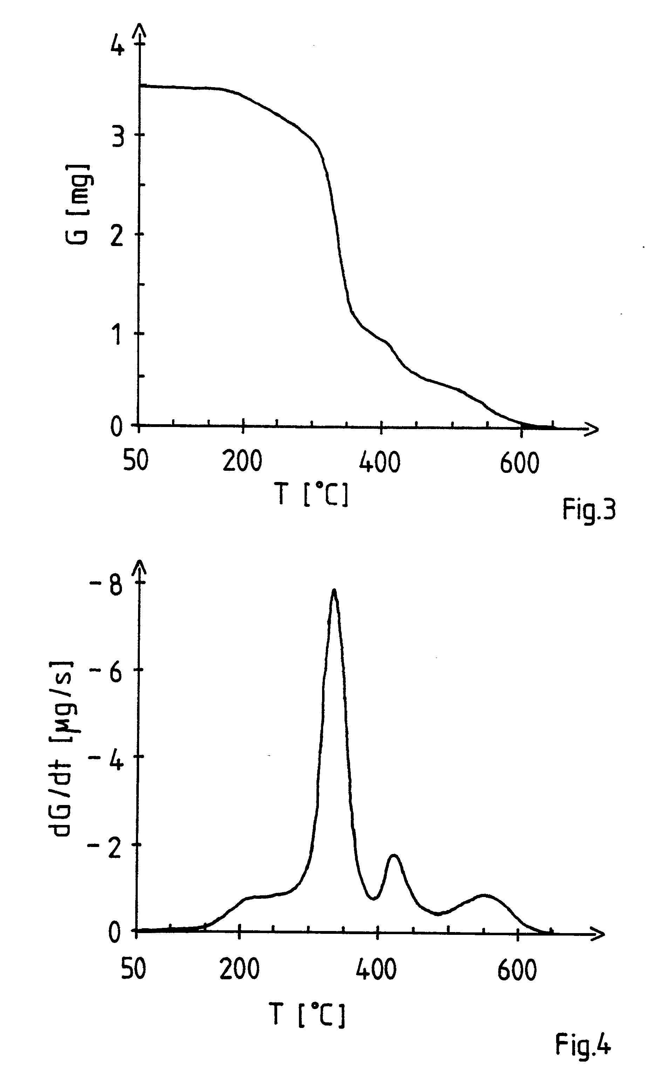

Figur 3 zeigt in Form eines Diagramms eine Thermogravimetrie der Binderzusammensetzung. Es ist die absolute Gewichtsabnahme in mg in Abhängigkeit von der Temperatur wiedergegeben. Das Diagramm gemäß Figur 4 zeigt die zeitliche Gewichtsabnahme in μg/s und spiegelt den Vorgang des Austreibens des Binders in oben genanntem Beispiel wider.

Beispiel 2

Es werden 65 Vol% bzw. 86 Gew% Aluminiumoxydpulver mit einer mittleren Korngröße von 2,1 μ im Kneter mit 14 Gew% eines Kunststoffbinders vermischt, bei 120°C aufgeschmolzen und homogenisiert. Als Kunststoffbinder wird eine Mischung aus 50 Gew% Polyvinylacetat mit einem mittleren Molekulargewicht von 120.000, 40 Gew% PEG mit einem mittleren Molekulargewicht von 20.000 sowie 9,5 Gew% eines präpolymeren aliphatischen Polyesters aus Adipinsäure und PEG mit einem mittleren Molekulargewicht von 3.000 und 0,5 Gew% eines oberflächenaktiven Tensids zur Verbesserung der Gleitwirkung, bestehend aus einem Polyethoxylaurylsäureester verwendet.

Das so hergestellte Compound läßt sich durch Extrusion zu einem gut rieselfähigen Feedstockgranulat verarbeiten und bei 120°C spritzgießen.

Die bei 20°C Formtemperatur erhaltenen Teile zeigen gute Grünfestigkeit und der Binder ist analog zum Beispiel 1 durch Pyrolyse gut zu entfernen.

Beispiel 3

Es werden 65 Vol% bzw. 92,5 Gew% Metallpulver eines Eisen/Chrom/Nickel-Edelstahltyps der mittleren Korngröße 7,5 μ mit 35 Vol% oder 7,5 Gew% Kunststoffbinder vermischt, im Horizontalkneter bei 140°C aufgeschmolzen und homogenisiert.

Als Kunststoffbinder werden in diesem Fall 70 Gew% PVAc mit einem mittleren Molekulargewicht von 240.000, mit 24 Gew% eines Copolymeren aus 60 % Ethylen- und 40 % Propylenoxid mit einem mittleren Molekulargewicht von 20.000 sowie 0,5 Gew% eines diaminosubstituierten trimeren Ethylenoxids als Haftvermittler sowie 0,5 Gew% eines Polyethoxydodecylsäureester als Gleitmittel vermischt eingesetzt.

Das so hergestellte Compound besitzt bei hohen Schergeschwindigkeiten im Extruder gute Fließfähigkeit. Die hergestellten Grünlinge zeigen nach dem Spritzgießen gute Festigkeit und der Binder ist analog zum Beispiel 1 durch Pyrolyse leicht zu entfernen.

**Ansprüche**

1. Binderzusammensetzung für das Spritzgießen oder Extrudieren von Metall- oder Keramikpulvern, enthaltend 30 bis 90 Gew.-% Polyvinylacetat (PVAc) mit einem mittleren Molekulargewicht von 35.000 bis 1.000.000 und 10 bis 70 Gew.-% eines Schmelzeweichmachers und Verarbeitungsplastifikators für das PVAc ausgewählt aus

a) Polyethylenglykol (PEG) mit einem mittleren Molekulargewicht von 500 bis 50.000,

b) präpolymeren, aliphatischen Polyestern aus Adipinsäure und PEG mit einem mittleren Molekulargewicht von 2.000 bis 20.000 und

c) hydroxyterminierten Copolymeren aus Ethylen- und Propylenoxid mit einem mittleren Molekulargewicht von 2.000 bis 20.000,

wobei die Komponente a) mit b) oder c) auch im Gemisch vorliegen kann mit einem Anteil von 5 bis 30 Gew.-% an b) oder c) an der Gesamtmenge der Bindemittelzusammensetzung.

2. Binderzusammensetzung nach Anspruch 1, bei der das PVAc ein Molekulargewicht von 50.000 bis 200.000 aufweist.

3. Binderzusammensetzung nach Anspruch 1 oder 2, bei der das PEG ein Molekulargewicht von 6.000 bis 35.000 aufweist.

4. Binderzusammensetzung nach einem der Ansprüche 1 bis 3, bei der PVAc mit 60 bis 80 Gew.-% und PEG mit 20 bis 40 Gew.-% enthalten sind.

5. Binderzusammensetzung nach einem der Ansprüche 1 bis 4, dadurch gekennzeichnet, daß als Benetzungsmittel und Dispergierhilfsmittel für das Metall- oder Keramikpulver rückstandsfrei pyrolisierbare aliphatische Tenside, z. B. Polyethylenoxidaddukte an Fettsäuren, Fettalkoholen und -amiden, Zucker-, Celluloseester von organischen Fettsäuren oder -ether von Fettalkoholen oder Lecithin mit einem Anteil von 0,5 bis 5 Gew.-% vorgesehen sind.

6. Binderzusammensetzung nach einem der Ansprüche 1 bis 5, dadurch gekennzeichnet, daß als Haftvermittler für das Metall- oder Keramikpulver und den Binder aliphatische Aminoalkohole, Aminoether, Aminoetheralkohole oder Hydantoine mit einem Anteil von 0,5 bis 5 Gew.-% vorgesehen sind.

7. Binderzusammensetzung nach einem der Ansprüche 1 bis 6, dadurch gekennzeichnet, daß als Gleitmittel zur Verbesserung der Fließfähigkeit des Compounds aus Metall- oder Keramikpulver und Binder Paraffine und/oder kurzkettige Ethylenpolymere bzw. aliphatische Fettsäureester mit mindestens 8 C-Atomen mit einem Anteil von 0,5 bis 8 Gew.-% vorgesehen sind.

PVA70/PEG(20)30

Fig.1

PVA70/PEG(20)30

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 715 100 (LION CORP) <br> * Ansprüche 1, 5 * <br> – – – | 1 | C 08 <br> L 31/04 <br> C 08 L 71/02 |
| X | DE-A-2 153 282 (CIBA-GEIGY AG) <br> * Seite 3, Zeile 18 * * Beispiele 1 - 22 * <br> – – – – | 1 | C 08 L 67/02 |

**RECHERCHIERTE SACHGEBIETE (Int. Cl.5)**

C 08 L
C 09
J
C 08 K

Der vorliegende Recherchenbericht wurde für alle Patentansprüche erstellt

| Recherchenort | Abschlußdatum der Recherche | Prüfer |
|---|---|---|
| Den Haag | 04 März 91 | SCHUELER D.H.H. |